# EUROPÄISCHE PATENTSCHRIFT

(11) **EP 0 638 018 B1**
(45) Veröffentlichungstag und Bekanntmachung des Hinweises auf die Patenterteilung: **15.11.1995**
(21) Anmeldenummer: 93911500.2
(22) Anmeldetag: 23.04.1993
(51) Int. Cl.: B30B 11/28

(54) **VORRICHTUNG ZUM PELLETIEREN VON PFLANZLICHEM GUT**
DEVICE FOR PELLETIZING VEGETABLE MATERIALS
DISPOSITIF A PELLETISER DES MATIERES VEGETALES

(30) Priorität: 29.04.1992 DE 4214111; 22.08.1992 DE 4227928; 29.01.1993 DE 9301258 U; 29.03.1993 DE 9304636 U
(43) Veröffentlichungstag der Anmeldung: 15.02.1995
(73) Patentinhaber: HAIMER, Franz, D-86568 Igenhausen (DE)
(72) Erfinder: HAIMER, Franz, D-86568 Igenhausen (DE)
(74) Vertreter: Ernicke, Hans-Dieter, Dipl.-Ing.
(86) Internationale Anmeldenummer: EP9300990
(87) Internationale Veröffentlichungsnummer: WO9322132

(56) Entgegenhaltungen:
- DE-A- 2 151 865
- FR-A- 1 371 346
- GB-A- 339 868
- GB-A- 380 987
- US-A- 3 192 881
- US-A- 3 859 026
- US-A- 4 824 352
- Patent Abstracts of Japan vol. 9, no. 184(C-294)30.Juli 1985 &JP-A-60 051 788 (YASOU KAKIUCHI) 23.März 1985

## Beschreibung

Die Erfindung befaßt sich mit einer Vorrichtung zum Pelletieren von pflanzlichem Gut, insbesondere Halmgut, zu schüttfähigen Preßlingen für die Herstellung von tierischen Futtermitteln, Brennstoffen zur Energiegewinnung oder für die industrielle Weiterverarbeitung.

Der Oberbegriff des Schutzanspruches 1 geht von der US-A-4 824 352 aus, welche eine Pelletierpresse für die Verarbeitung von groben und langen Fasern, insbesondere Stroh, zu Tierfutter offenbart. Das Material wird über einen Schneckenförderer einem sich erweiternden Trichter zugeführt, der im Einlaufzwickel von zwei zwangsläufig angetriebenen, zahnradartig ineinandergreifenden Hohlwalzen angeordnet ist. Vom Zahngrund aus führen mehrere radial sich verengende Bohrungen in den Innenraum der Hohlwalzen. Die Zähne sind in axialer Richtung langgestreckt und wälzen sich aneinander ab. Das in den Zwickelbereich der Hohlwalzen herangeführte Halmgut wird von den in die Zahnlücken eintauchenden Zähnen verdichtet und durch die radialen Bohrungen zu Strängen verpreßt, die im Hohlraum der Hohlwalzen abbrechen und axial aus den Hohlräumen abgeführt werden.

Die praktische Arbeit mit derartigen Pelletiervorrichtungen zeigt, daß es problematisch ist, große Halmgutmengen störungsfrei zu verpressen. Das Halmgut wickelt sich nämlich um die Zähne der Hohlkörper und baut sich im Zahngrund neben den radialen Bohrungen widerstandserhöhend auf, so daß immer wieder Blockierungen der rotierenden Körper eintreten. Solche Einrichtungen sind erst recht nicht geeignet, Preßlinge hoher Dichte aus Halmgut herzustellen, um sie als Brennmaterial oder für industrielle Zwecke einzusetzen, weil der Reibungswiderstand der ineinandergreifenden Zähne sowie der konischen Bohrungen viel zu groß ist, so daß die zum Antrieb der Hohlwalzen benötigte Energie übermäßig anwächst und mit den herkömmlichen Mitteln gar nicht erbracht werden kann. Es kommt hinzu, daß die sich an den Hohlwalzen absetzenden Rückstände des Halmgutes aufgrund der gesteigerten Kompressionswirkung bis auf Pyrolysetemperaturen erhitzt werden, deren verkohlte Rückstände ebenfalls rasch zum Ausfall der Pelletiervorrichtung führen.

Der Erfindung liegt daher die Aufgabe zugrunde, die vorbekannte Pelletiereinrichtung dahingehend weiterzuentwickeln, daß eine störungfreie Pressung von Halmgut im Dauerbetrieb ermöglicht und obendrein ein hoher Durchsatz des Halmgutes bei niedriger Antriebsleistung erreicht werden kann.

Die erfindungsgemäße Lösung der gestellten Aufgabe ergibt sich aus den kennzeichnenden Merkmalen des Patentanspruches 1.

Zufolge der Ausbildung der Zähne als in radialer und axialer Richtung sich langerstreckende Stege, zwischen denen sich radiale Schächte als Preßkanäle befinden, wird vermieden, daß im Preßvorgang befindliches Material sich stauen und zu Blockierungen führen kann.

Durch die axiale Erstreckung der Stege und damit auch der dazwischen befindlichen Preßkanäle erhalten letztere eine in axialer Richtung langgestreckte schmale Form, was dazu führt, daß entsprechend dieser Form verhältnismäßig breite und dünne Stränge mit dem verpreßten Material erzeugt werden können, wodurch ein großer Materialdurchsatz je Zeiteinheit erzielbar ist. Normalerweise sind die Preßkanäle in radialer Draufsicht rechteckig ausgebildet. Wenn man aber die Dicke der Stege in axialer Richtung veränderlich, zum Beispiel ballig macht, dann entstehen bauchige Querschnitte der Preßkanäle.

Die erhebliche radiale Erstreckung der Zähne hat in Verbindung mit ihrer Beheizung den Vorteil, daß das in den Schächten befindliche verpreßte Material eine bestimme Zeit unter Wärme- und Druckeinwirkung verweilen kann, was zu einer gewissen Aushärtung und Formbeständigkeit führt. Auf diese Weise kann die Dichte des Preßlings in erwünschtem Maß gesteigert und der Preßling als schüttfähiges Brennmaterial oder als Ausgangsprodukt für industrielle Weiterverarbeitung eingesetzt werden.

Es ist zwar durch die US-A-3 192 881 bekannt, die Zuführ- und Preßorgane einer Pelletierpresse zu beheizen. Das dabei angewandte Verdichtungsverfahren beruht aber auf Anwendung der Fliehkraft und ist nicht in der Lage, die Aufgabe der Erfindung zu lösen. Erst recht können keine Preßlinge hoher Dichte hergestellt werden.

Ferner ist es durch die FR-A-1 371 346 bekannt, zahnradartig ineinandergreifende Hohlwalzen einer Pelletiereinrichtung mit einem Gehäuse zu umgreifen, wobei Schüttgut für pharmazeutische Anwendungszwecke, zu Düngemitteln oder zu keramischen bzw. mineralischen Produkten verarbeitet werden soll. Abgesehen davon, daß diese Anwendungszwecke gattungsfremd sind, beruht die Verdichtung dieser vorbekannten Anlage ebenfalls auf sich aneinander abwälzenden Zähnen, in deren Zahngrund radial sich erstreckende Bohrungen als Verdichtungskanäle angeordnet sind. Sie kann demnach ebenfalls nicht die Aufgabe der Erfindung lösen.

Beim Gegenstand der Erfindung wälzen sich hingegen die Stege nicht aneinander ab, und sie berühren sich auch nicht beim Eintauchen in die zwischen Stegen des jeweils anderen Hohlkörpers befindlichen Schächte. Die Stegkanten passieren einander in einer nur geringen Distanz, was zum Abscheren des zwangsweise durch Preßschnecke herangeführten Halmgutes führt. Da sich zwischen den Stegen nur die radial durchgehenden Schächte befinden und somit kein Zahngrund mit darin befindlicher Bohrung vorgesehen ist, kann sich auch kein zum Verkohlen neigender Stau des in Pressung befindlichen Halmgutes entwickeln.

Der wesentliche Vorteil der erfindungsgemäßen Anordnung liegt in ihrer hohen Leistung und im Wirkungsgrad, weil sich mit der Erfindung sehr große Durchsatzmengen je Zeiteinheit bei einem verhältnismäßig geringen Energieaufwand verpressen lassen.

Mit den Gegenständen der Patentansprüche 2 bis 4 werden vorteilhafte Beispiele für die konstruktive Gestaltung der Hohlwalzen aufgezeigt.

Die Anordnung der Pelletiereinrichtung auf einer Erntemaschine gemäß den Patentansprüchen 5 bis 8 bringt den erheblichen Vorteil mit sich, daß das Pelletieren von Halmgut in einem Arbeitsgang auf dem Feld beim Ernteeinsatz vom Mähen bis zum Bunkern der gepreßten Pellets geschehen kann.

Es ist zwar durch die bereits erwähnte US-A-3 192 881 eine Erntemaschine mit einer Mäheinrichtung für Halmgut (Heu) und einer pick-up-Einrichtung mit Zwangsförderung des gemähten Gutes über eine Förderschnecke zu einer Pelletiervorrichtung bekannt, deren Preßwerkzeuge erwärmt werden. Die Abwärme der Brennkraftmaschine wird dabei zum Beheizen der Fördermittel für das Halmgut eingesetzt, wohingegen für das Beheizen der Preßorgane der Pelletiervorrichtung eine besondere Wärmequelle installiert werden muß.

Bei der Erfindung werden hingegen die Stege bevorzugt durch die Abgase der Brennkraftmaschine auf vorzugsweise mehr als 150°C, insbesondere 165°C erhitzt. Das Halmgut läßt sich am besten verarbeiten, wenn es eine Feuchtigkeit von 16 bis 18 % enthält. Liegt die Feuchtigkeit des Erntegutes unterhalb dieser Werte, empfiehlt es sich, dem Halmgut auf dem Weg zur Pelletierpresse Feuchtigkeit zuzusetzen.

Die Gegenstände der Patentansprüche 9 bis 14, die zum Teil selbständigen Erfindungscharakter besitzen, befassen sich mit wichtigen Weiterentwicklungen der erfindungsgemäßen Lehre, die aus intensiven Versuchen und Testen der verschiedensten Pelletiereinrichtungen entstanden sind.

Die Geometrie der erfindungsgemäßen Stege und Schächte gemäß den Patentansprüchen 10 und 11 beinhaltet vorteilhafte Ausgestaltungen der Lehre der Erfindung.

Die Gegenstände der Patentansprüche 12 und 13 haben zum Vorteil, daß die Verdichtung und die Verweilzeit des Halmgutes in den Schächten optimal geschehen kann. Hierbei wird vor allem erreicht, daß das gepreßte Material bei verminderter Reibung einer bestimmten Wärmeeinwirkung ausgesetzt wird und damit für den Einsatz als Brennmaterial wichtige Eigenschaften erhält.

In den übrigen Unteransprüchen sind vorteilhafte Ausgestaltungen der Erfindung offenbart, deren Vorteile sich aus der Beschreibung dieser Merkmale ergeben.

Diese und weitere Merkmale der Erfindung sind in der Zeichnung schematisch und beispielsweise dargestellt. Es zeigen:
- Fig. 1:: eine Erntemaschine mit einer Pelletiervorrichtung gemäß der Erfindung;
- Fig. 2:: eine Schnittansicht der Pelletiervorrichtung, gesehen entlang einer Linie II-II in Fig. 3;
- Fig. 3:: eine Schnittansicht der Pelletiervorrichtung, gesehen entlang einer Linie III-III in Fig. 2;
- Fig. 4:: eine schematische Darstellung einer Preßvorrichtung für Halmgut, die in der Erntemaschine der Fig. 1 einsetzbar ist;
- Fig. 5:: einen Schnitt entsprechend Fig. 2 durch ein bevorzugtes Ausführungsbeispiel der Pelletiervorrichtung;
- Fig. 6:: einen Teilschnitt entsprechend Fig. 5 in vergrößerter Darstellung;
- Fig. 7:: einen radialen Längsschnitt durch einen Steg in etwa natürlicher Größe;
- Fig. 8:: einen radialen Längsschnitt durch mehrere in verschiedenen Eingriffstellungen befindlichen Stege;
- Fig. 9:: eine Teilstirnansicht auf einen Flanschkörper mit darin befindlichen Aussparungen;
- Fig. 10:: eine Teilstirnansicht gemäß Fig. 9 mit in den Aussparungen angeordneten und verkeilten Stegen;
- Fig. 11:: eine Draufsicht auf die Anordnung gemäß Fig. 10;
- Fig. 12:: eine Seitenansicht, teilweise im Schnitt, auf eine stationäre Pelletiereinrichtung;
- Fig. 13:: einen Vertikalschnitt längs der Linie XIII-XIII durch die Pelletiervorrichtung gemäß Fig. 12;
- Fig. 14:: eine Erntemaschine als Alternative zu Fig. 1,
- Fig. 15:: einen radialen Längsschnitt durch mehrere Stege mit dazwischen eingesetzten Trennwänden,
- Fig. 16:: eine Draufsicht auf mehrere Stege entsprechend Pfeil A in Fig. 15,
- Fig. 17:: einen Querschnitt durch die Trennwand nach der Linie XVII-XVII gemäß Fig. 16 und
- Fig. 18:: eine Teilstirnansicht einer Hohlwalze mit einer oszillierenden Schleifeinrichtung.

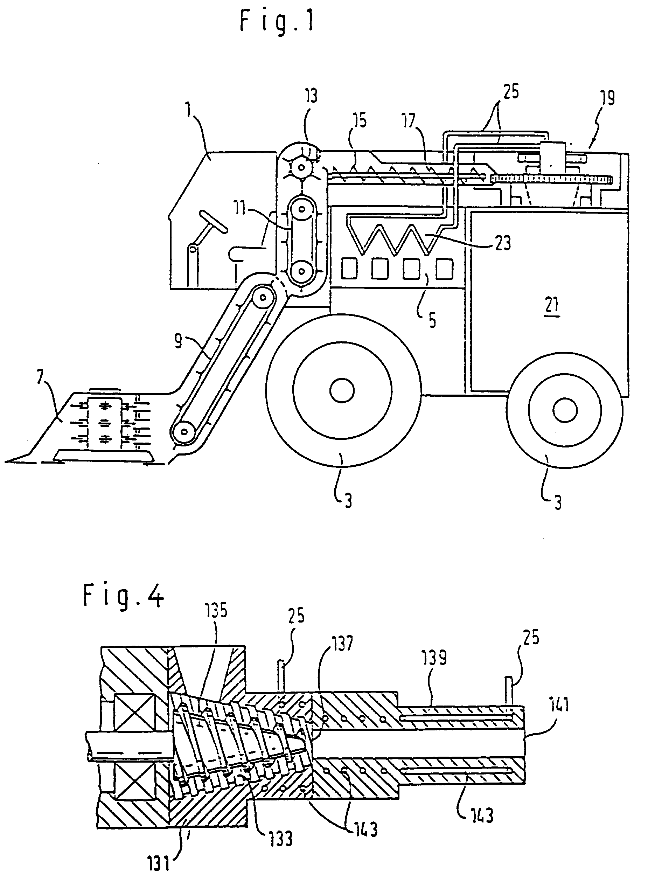

Fig. 1 zeigt eine von einer Fahrerkabine (1) aus steuerbare, selbstfahrende Erntemaschine, deren Räder (3) von einer Brennkraftmaschine (5) angetrieben werden. Die Erntemaschine trägt an ihrem vorderen Ende ein Mähwerkzeug (7), zum Beispiel ein Kreiselmähwerkzeug mit Vorzerkleinerungeinrichtungen, das zu erntendes Halmgut schneidet und zerkleinert. Ein Schrägförderer (9) überführt das vorzerkleinerte Halmgut auf einen Vertikalförderer (11), der es einer im oberen Bereich der Erntemaschine angeordneten Umlenkwalze (13) eines Nachzerkleinerungswerks zuführt. Die Umlenkwalze (13) übergibt das nachzerkleinerte Halmgut einer Trogschnecke (15), an die sich eine Preßschnecke (17) anschließt. Der Ausgang der Preßschnecke (17) mündet in einer nachfolgend noch näher erläuterten Pelletiervorrichtung (19), die das von der Preßschnecke (17) vorverdichtete Halmgut zu schüttfähigen Pellets komprimiert. Die Pelletiervorrichtung (19) ist oberhalb eines im hinteren Bereich der Erntemaschine angeordneten Bunkers (21) angeordnet, der die Pellets aufnimmt.

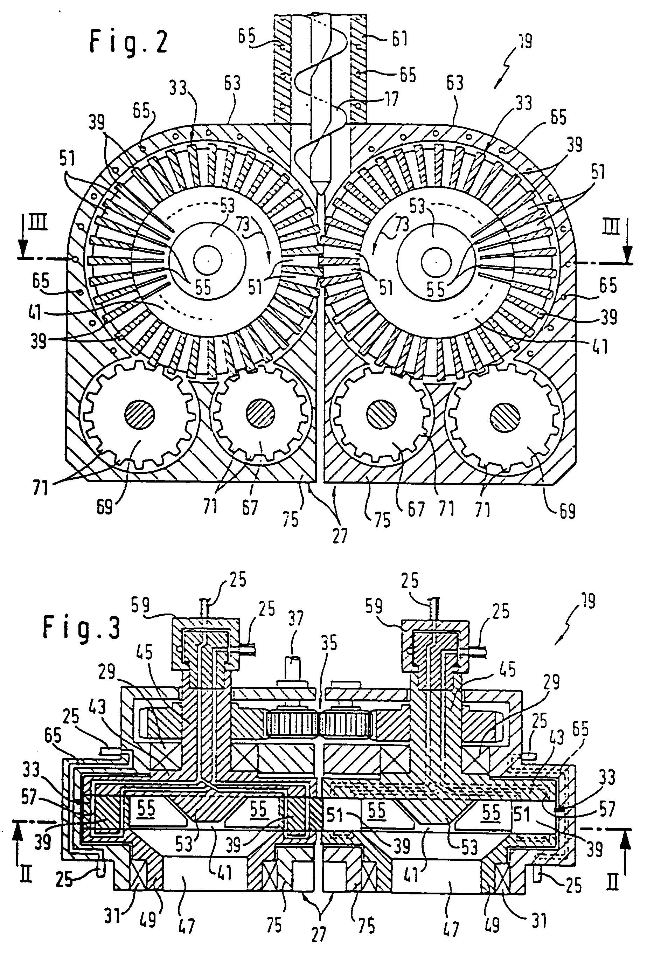

Die Pelletiervorrichtung (siehe Fig. 2 und 3) umfaßt zwei parallel zueinander gelagerte, als Hohlwalzen (33) ausgebildete Pelletierkörper, die an ihrem Umfang ineinandergreifende Stege und Schächte aufweisen, und über einen Wärmekreislauf von der Abwärme der Brennkraftmaschine (5) auf wenigstens 100°C, vorzugsweise jedoch auf mehr als 150°C, erwärmt werden. Der Wärmekreislauf umfaßt bei diesem Beispiel einen an den Kühlmittelkreislauf der Brennkraftmaschine angeschlossenen Wärmetauscher (23) oder bildet als solcher den Kühlmittelkreislauf und ist über Verbindungsleitungen (25) an nachfolgend noch näher erläuterte Wärmemittelkanäle der Pelletierkörper angeschlossen. Auf diese Weise kann die Abwärme der Brennkraftmaschine (5) rückgewonnen werden, was den Gesamtwirkungsgrad der Erntemaschine erheblich verbessert. Die Brennkraftmaschine (5) treibt nicht nur die Räder (3) der Erntemaschine an, sondern zumindest auch die Pelletierkörper der Pelletiervorrichtung (19) und gegebenenfalls auch das Kreiselmähwerkzeug (7) einschließlich der Förderer (9) bis (17).

Eine wesentliche Steigerung des Wirkungsgrades der Gesamtanlage wird dann erreicht, wenn die Abgase der Brennkraftmaschine (5) zum Beheizen der Pelletiereinrichtung verwendet werden. Dann läßt sich ohne weitere Energiezufuhr eine Erwärmung der Preßelemente auf ca. 165°C erreichen, was sich als optimal für den Preßvorgang herausgestellt hat.

Es versteht sich daher, daß zusätzlich oder anstelle des mit dem Kühlkreislauf der Brennkraftmaschine (5) verbundenen Wärmetauschers (23) auch andere Wärmetauscher gegebenenfalls zusätzlich zur Erfassung anderer Abwärmequellen der Brennkraftmaschine vorgesehen sein können.

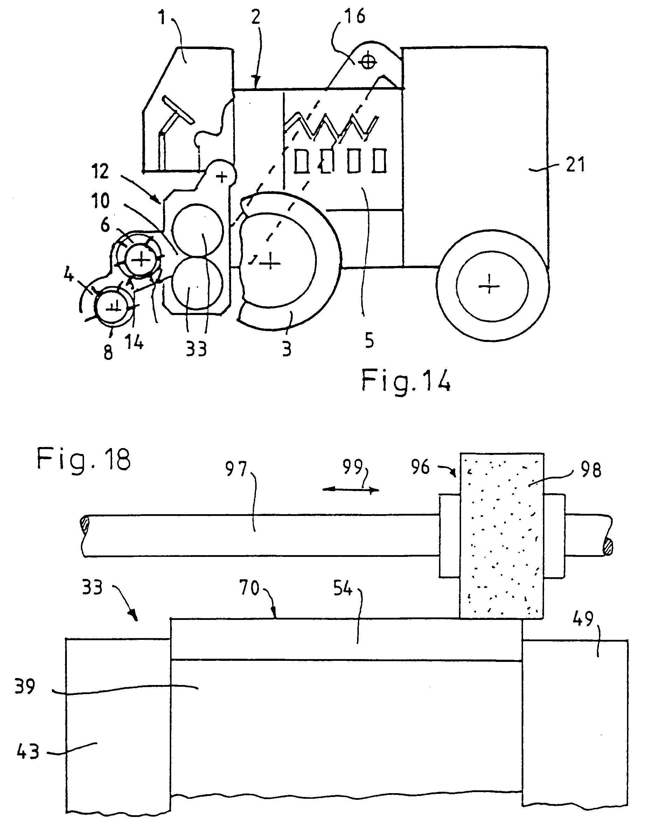

In Fig. 14 ist eine zu Fig. 1 alternative Erntemaschine (2) gezeigt, die von der Fahrerkabine (1) aus steuerbar ist und von einer Brennkraftmaschine (5) angetrieben wird. Die Erntemaschine trägt an ihrem vorderen Ende eine Pick-up-Aufnahmevorrichtung (4) für Halmgut, über und in Fahrtrichtung nach hinten versetzt eine Seitenförderschnecke (6), bestehend aus einem Rohr mit zwei Schneckenwedeln, welche das Aufnahmegut zur Mitte fördern. Dort wird es von gesteuerten Förderzinken (8) erfaßt, in den Einlaufbereich (10) einer Preßvorrichtung (12) gefördert und dabei an in den Förderweg ragenden Schneidmessern (14) zerkleinert.

Als Preßvorrichtung (12) ist in der Zeichnung schematisch die Verwendung einer Pelletiervorrichtung, bestehend aus zwei achsparallel zueinander angeordneten Hohlwalzen (33) (siehe Fig. 5) dargestellt. Es kann aber auch ein Schneckenverdichter verwendet werden.

Mit einem Elevator (16) werden die Pellets beziehungsweise Preßlinge in einen Bunker (21) gefördert.

Die Anordnung der Preßvorrichtung unmittelbar hinter einem Aufnahmegerät oder einer Mähvorrichtung für das Preßgut ist auch von selbständiger, erfinderischer Bedeutung, wenn die Preßvorrichtung nicht als austauschbare Baueinheit ausgeführt ist, weil es für den Arbeitsprozeß vorteilhaft ist, wenn das zu verpressende Gut unmittelbar nach der Aufnahme verdichtet wird und somit der Transportweg für das Gut mit geringer Dichte kurz ist.

Die Fig. 2 und 3 zeigen Einzelheiten der Pelletiervorrichtung (19). Die Pelletierkörper haben die Form von zwei zueinander achsparallel in einem Gehäuse (27) an Lagern (29,31) drehbar gelagerten Hohlwalzen (33), die über ein Zahnradgetriebe (35) von einer Antriebswelle (37) aus gegensinnig rotierend angetrieben werden.

Die Hohlräder (33) haben eine vielzahl angenähert im Axiallängsschnitt eben verlaufende Stege (39), die einen Hohlraum (41) umschließen. Die Stege (39) sitzen lösbar befestigt axial zwischen einem plattenförmigen Flanschkörper (43), der seinerseits an einem mit dem Getriebe (35) verbundenen Achszapfen (45) gehalten ist, und andererseits an einem ringförmigen, eine Auslaßöffnung (47) umschließenden Flanschkörper (49). In Umfangsrichtung begrenzen jeweils benachbarte Stege (39) einen etwa keilförmig zum Hohlraum (41) hin sich verjüngenden, stufenlos vom Außenumfang zum Innenumfang der Umfangswand durchgehenden Preßkanal (Schacht) (51). In die in Axialrichtung der Hohlwalzen (33) im Querschnitt langgestreckt rechteckförmigen Schächte (51) greifen die radial äußeren Endbereiche der Stege (39) der jeweils anderen Hohlwalze als Preßstempel ein, während die Hohlwalzen (33) gegensinnig rotieren. Von der Preßschnecke (17) in den Abwälzspalt der beiden Hohlwalzen (33) zwangsweise gefördertes und zerkleinertes Halmgut wird von den Stegen (39) in die Schächte (51) hineingedrückt und dort verdichtet. Die Abmessung der Stege (39) ist so gewählt, daß sie mit Schnittluft in die Schächte (51) eingreifen, sich also nicht berühren, während die Hohlräder (33) über das Getriebe (35) relativ zueinander zwangsweise angetrieben werden.

Im Inneren der Hohlräume (41) deren axiale Tiefe (bezogen auf die axiale Länge der Stege (39)) kleiner ist als deren Innendurchmesser, sitzen zentrisch angeordnete, zur Auslaßöffnung (47) hin sich verjüngende Brechkegel (53), die die aus den Schächten (51) radial nach innen austretenden Preßstränge zu Pellets aufbrechen und zur Auslaßöffnung (47) umlenken. Radiale Leitbleche (55) (Fig. 2), die die Stege (39) zum Brechkegel (53) hin verlängern, verstärken diese Wirkung. Die Hohlwalzen sind bei diesem Beispiel mit nach unten gerichteter Auslaßöffnung (47) angeordnet, so daß die gebrochenen Pellets unmittelbar in den Bunker (21) (Fig. 1) fallen können.

Wie am besten Fig. 3 zeigt, enthalten die Stege (39) Wärmemittelkanäle (57), die über den Flanschkörper (43) und den Achszapfen (45) mit einer Flüssigkeits-Drehkupplung (59) verbunden sind, an die die Wärmemittelleitungen (25) angeschlossen sind. In den Wärmemittelkanälen (57) zirkuliert von den Wärmetauscher (23) der Brennkraftmaschine (5) auf mindestens 150°C erwärmtes, flüssiges Wärmeträgermedium, beispielsweise in Form eines wärmefesten Öls oder dergleichen. Die Temperierung des zu pelletierenden Halmguts in den Schächten (51) mindert die zum Antrieb der Hohlwalzen (33) erforderliche Antriebsleistung und verringert den zur Kompaktierung erforderlichen Druck in den Schächten (51). Es versteht sich, daß gegebenenfalls in den Wärmemittelkreislauf eine Wärmepumpe geschaltet sein kann, falls das von der Brennkraftmaschine (5) gelieferte Temperaturniveau zu niedrig sein sollte. Zusätzlich zu den Wärmemittelkanälen (57) sind auch im Gehäuse (61) der den Zuführweg bildenden Preßschnecke (17), wie auch in den die Hohlwalzen (33) bis auf den Zuführweg engpassend umschließenden Bereichen (63) des Gehäuses (27) weitere mit dem Wärmetauscher (23) (Fig. 1) verbundene Wärmemittelkanäle (65) vorgesehen. Die Wärmemittelkanäle (65) in den Gehäusewänden (63) oder dem Gehäuserohr (61) können gegebenenfalls entfallen. Soweit die Heizleistung der Wärmemittelkanäle (65) für sich genommen ausreicht, können gegebenenfalls auch stattdessen die Wärmemittelkanäle (57) der Hohlwalzen (33) entfallen.

Jeder der beiden Hohlwalzen (33) können zur Verbesserung der Preßwirkung zwei achsparallel zu den Hohlwalzen (33) drehbar in dem Gehäuse (27) gelagerte Nachpreßwalzen (67) beziehungsweise (69) zugeordnet sein. Die Nachpreßwalzen (67,69) haben im Gegensatz zu den Hohlwalzen (33) ausschließlich radial abstehende Stempel (71), die in die Schächte (51) der zugeordneten Hohlwalze (33) eingreifen. Die Nachpreßwalzen (67,69) kämmen nacheinander mit der zugeordneten Hohlwalze (33), wobei die Eindringtiefe der Stempel (71) von in Drehrichtung (73) der Hohlwalzen aufeinanderfolgenden Nachpreßwalzen zunimmt. Die unterschiedliche Eindringtiefe der Stempel (71) kann durch unterschiedliche Stempelhöhen und/oder unterschiedlichen Achsabstand zwischen den Nachpreßwalzen und den Hohlwalzen erreicht werden. Die Nachpreßwalzen (67,69) können lose durch den Eingriff der Stempel (71) angetrieben sein; sie können aber auch mit dem Getriebe (35) zwangssynchronisiert sein.

Um die Eindringtiefe der Stege (39) in die Schächte (51) justieren zu können, ist das Gehäuse (27) quer zur Verbindungsebene der Hohlwalzenachsen in zwei Gehäusehälften (75) unterteilt, an welchen je eine der Hohlwalzen (33) einschließlich der zugeordneten Nachpreßwalzen (67,69) gelagert ist. Die Gehäusehälften (75) sind angenähert in Richtung der Achsverbindungsebene relativ zueinander justierbar. Die Justierbewegung erfolgt zweckmäßigerweise um die Drehachse eines der Zahnräder des Getriebes (35), um den Eingriff der Zahnräder unabhängig von der Justierstellung aufrecht erhalten zu können. Es versteht sich, daß andere, den Zwangseingriff der Hohlwalzen sicherstellende Getriebeketten, beispielsweise in Form von Gliederketten oder Zahnriemen, ebenfalls einsetzbar sind.

Die Förderleistung der Preßschnecke (17) ist zweckmäßigerweise einstellbar, beispielsweise durch Variation der Schneckendrehzahl, um für eine gleichmäßige und optimale Beschickung der Hohlwalzen (33) mit zu pelletierendem Gut zu sorgen. Die Schneckendrehzahl wird zweckmäßigerweise abhängig von der Antriebsleistung der Hohlwalzen (33) über einen Regelkreis auf einem konstanten Sollwert gehalten.

Zur Einstellung der Schneckendrehzahl kann ein stufenloses, steuerbares Getriebe vorgesehen sein. Die Förderleistung der Preßschnecke kann jedoch auch in anderer Weise variiert werden, beispielsweise durch Verwendung einer axial verstellbaren Kegelschnecke in einem Kegelgehäuse.

Es versteht sich, daß bei den vorstehend erläuterten Ausführungsbeispielen der Pelletiervorrichtungen und der Preßvorrichtung andere Wärmequellen als die Abwärme der Brennkraftmaschine einer Erntemaschine eingesetzt werden können. Darüber hinaus ist hervorzuheben, daß die mechanische Konstruktion der Pelletiervorrichtungen der Fig. 2 und 3 im Einzelfall auch ohne Heizeinrichtungen zur Erwärmung der Preßkanäle eingesetzt werden kann.

In dem Ausführungsbeispiel der Fig. 5 bis 11 ist eine bevorzugte Ausführungsvariante für die erfindungsgemäße Pelletiereinrichtung gezeigt, deren Einzelmerkmale sich aus der Praxis und konsequenten Fortentwicklung des Gegenstandes der Fig. 2 ergeben haben.

Das Gehäuse (27) der Pelletiereinrichtung weist einen Gehäuserahmen (28) und eine Gehäuseschale (30) auf. Die Gehäuseschale (30) umgreift beide Hohlkörper (33) mit wesentlich geringerem Spiel als in Fig. 2 dargestellt. Das zu pelletierende Material wird in zerkleinertem Zustand über einen Gehäuseanschluß (32) in den Zwickelbereich der Hohlwalzen (33) zwangsweise herangeführt. Der Gehäuseanschluß (32) besitzt einen keilförmig sich in Förderrichtung erweiternden Hohlraum (34). Im gegenüberliegenden Zwickelbereich ist ein keilförmiges Bauteil (36) mit dem Gehäuse (28,30) verbunden, dessen Außenfläche (38) nahezu in Gleitreibung mit den äußeren Stirnbereichen der Stege (39) sich befindet.

Es hat sich nun in der Praxis herausgestellt, daß es von großem Vorteil ist, wenn die Gehäuseschale (30) nicht zentrisch zur Drehachse der Stege (39) liegt. Wenn man das Spiel zwischen der Innenfläche der Gehäuseschale (30) und den Außenmantelbereichen der Stege (39) veränderlich macht, und zwar so, daß im Bereiche der Berührungsstelle der Stege (39) mit dem keilförmigen Bauteil (36) ein minimales Spiel (40) und am Übergang der Gehäuseschale (30) zum Gehäuseanschluß (32) ein maximales Spiel (42) eingestellt wird, dann ist die Blockiergefahr der Rotation der Hohlkörper (33) in dem Gehäuse (28,30) beseitigt. Der Unterschied des Spieles ist verhältnismäßig gering; mit einem Unterschied von 1 mm sind gute Erfahrungen gemacht worden. Die Erfindung beschränkt sich aber nicht auf diese Maßangabe.

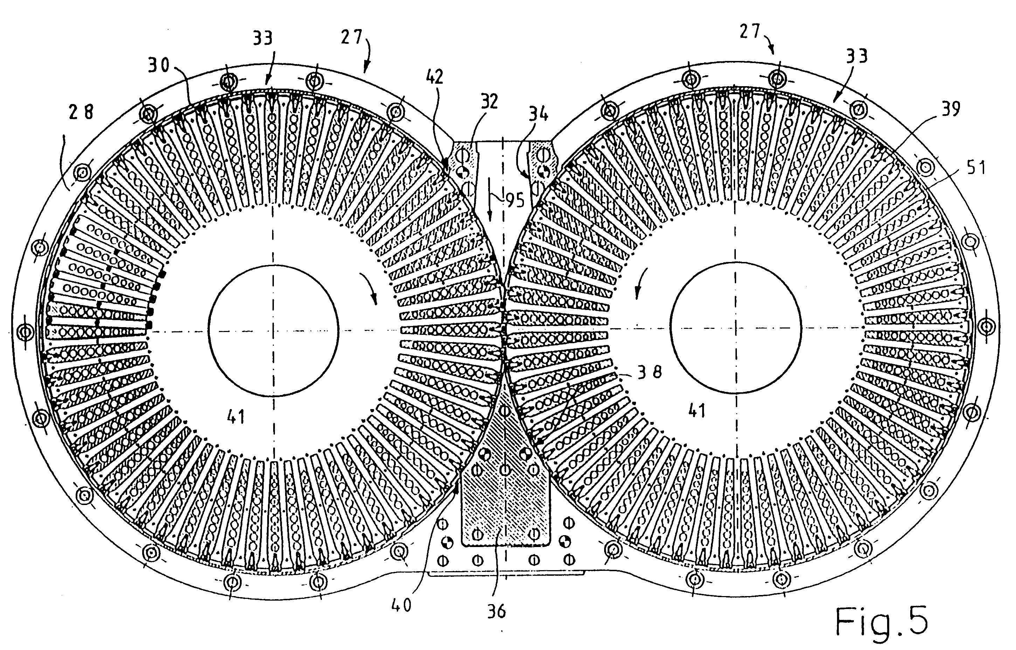

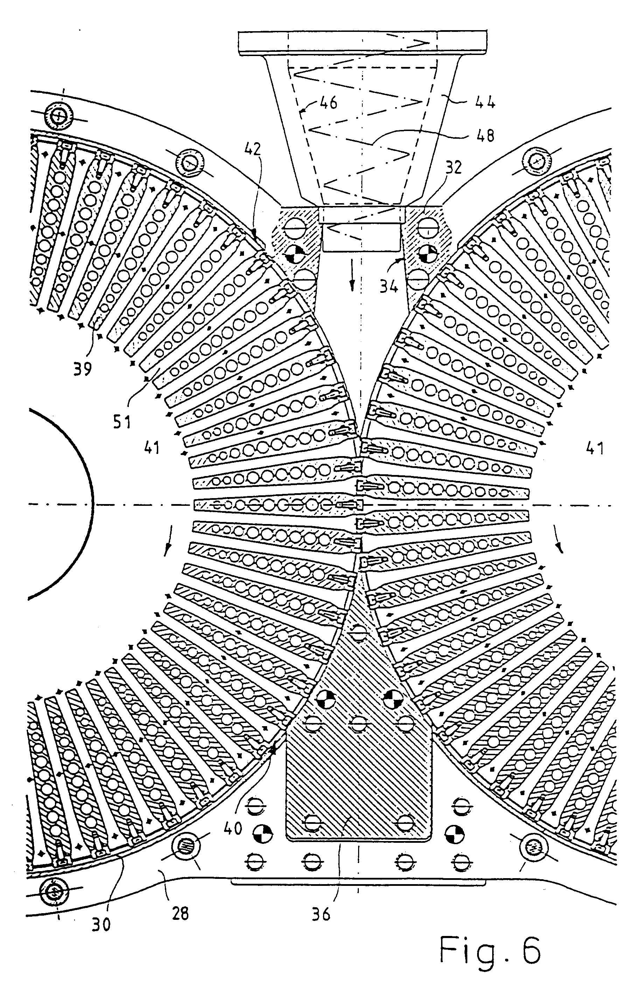

In der vergrößerten Darstellung gemäß Fig. 6 ist gezeigt, daß dem Gehäuseanschluß (32) ein Schneckengehäuse (44) benachbart ist, das eine in Förderrichtung des zu pelletierenden Gutes keilförmig sich verjüngenden Hohlraum (46). Dementsprechend ist die darin geführte Preßschnecke (48) ebenfalls keilförmig, wie dies auch aus Fig. 4 hervorgeht.

Mit dieser Maßnahme wird nicht nur ein zwangsweises Heranführen des zu pelletierenden Halmgutes erreicht, sondern auch ein erheblicher Förderdruck erzielt, der das im Hohlraum (34) befindliche Material zum Eindringen in die Schächte (51) zwingt.

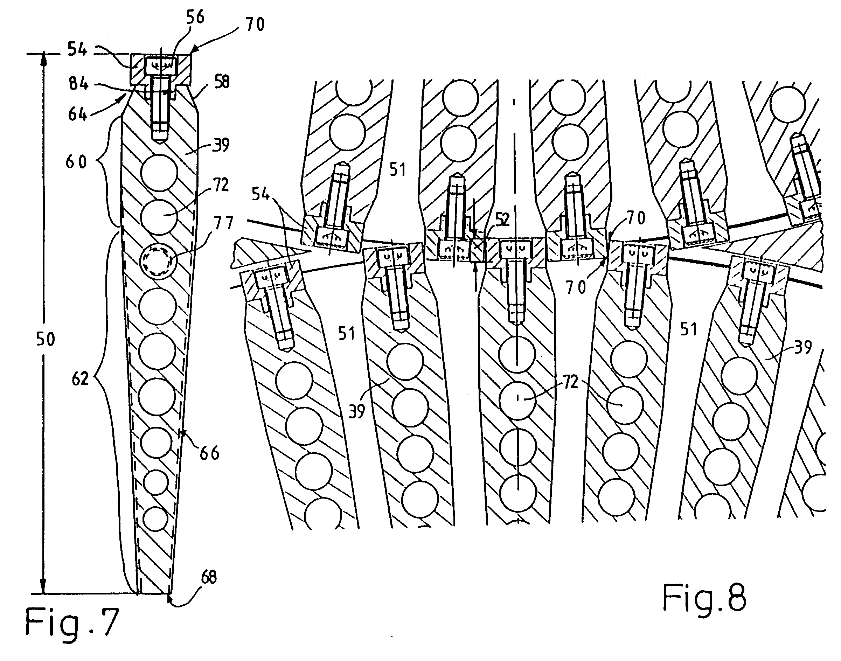

Außerdem erkennt man deutlich, daß die radiale Länge der Stege (39) und damit auch die radiale Länge der dazwischen befindlichen Schächte (51) wesentlich größer als die durchschnittliche Dicke der Stege (39) bzw. Schächte (51) ist. Ferner sieht man aus Fig. 8, daß die Eindringtiefe (52) der Stege (39) in die Schächte (51) verhältnismäßig minimal ist.

Die Geometrie der Stege (39), deren einzelner Aufbau in einem bevorzugten Ausführungsbeispiel in Fig. 7 gezeigt wird, ist so beschaffen, daß die Stegkanten (70) beim Ineinandergreifen sich nicht gegenseitig berühren sollen. Es ist vielmehr gewollt, daß zwischen den Stegkanten (70) ein kleines Spiel verbleibt. Die Stege (39) wälzen sich demnach nicht aneinander ab, wie dies beim Stand der Technik geschieht.

Das geringe Spiel zwischen den Stegkanten (70) hat aber zur Auswirkung, daß das in deren Bereich zwangsweise herangeführte Halmgut abgeschert und ohne Verbleib von Rückständen in die Schächte (51) gepreßt wird.

Um die dabei auftretenden hohen Kräfte aufzufangen, ist im Ausführungsbeispiel der Fig. 7 vorgesehen, daß die Stege (39) an der äußeren Stirnseite Verschleißriegel (54) aufweisen, welche mittels Schrauben (56) an den Stegen befestigt sind. Diese Verschleißriegel (54) sind mit Stegansätzen (90) in Nuten (84) geführt, damit der Preßdruck nicht auf die Schrauben (56) sich auswirken kann.

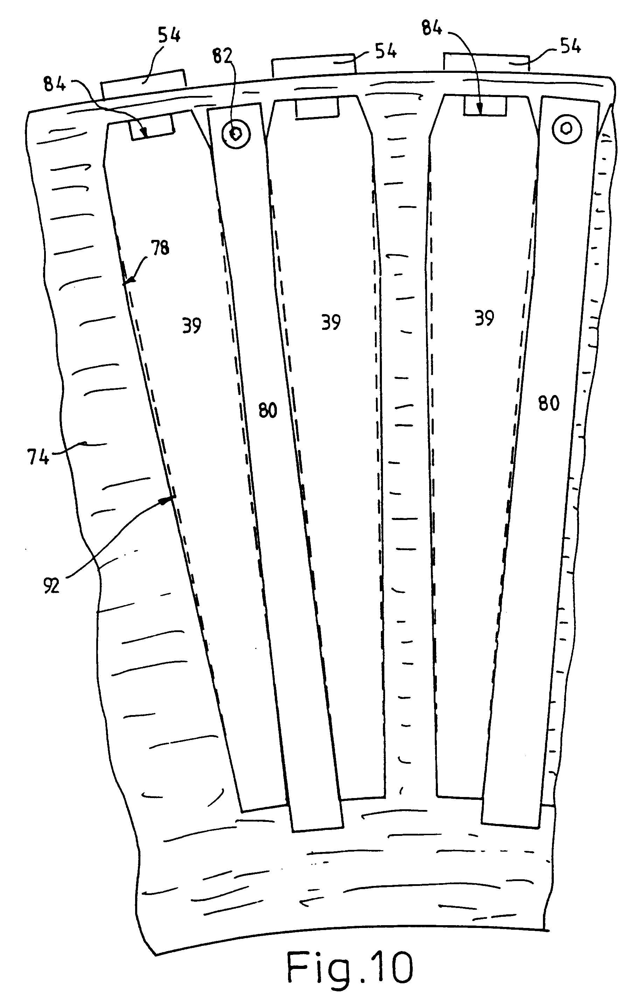

Der Verschleißriegel (54) dehnt sich senkrecht zur Zeichenblattebene quaderförmig aus. Wenn man beispielsweise davon ausgeht, daß die Darstellung in Fig. 10 der natürlichen Größe eines Steges (39) entspricht, beträgt die Länge des quaderförmigen Verschleißriegels (54) etwa 100 mm.

Es ergibt sich dadurch ein in axialer Richtung langgestreckter, etwa rechteckiger Querschnitt des Preßkanals (51), der auch bauchige Form besitzen kann.

Im radialen Querschnitt gemäß Fig. 7 weist der einzelne Steg (39) unterschiedliche Dicken auf. Unmittelbar hinter dem Verschleißriegel (54) befindet sich gegenüber einer keilförmigen Erweiterung (58) des Steges (39) eine Hinterschneidung (64). Im Anschluß an die keilförmige Erweiterung (58) befindet sich ein Bereich (60) konstanter Dicke des Steges (39), der auch leicht keilförmig sich erweiternd ausgebildet sein kann, wonach der Steg (39) in eine keilförmige Verjüngung (62) übergeht. Wie die Fig. 6 und 8 deutlich zeigen, bestimmen die Außenwandflächen der Stege (39) zufolge ihrer radialen Anordnung am Hohlkörper (33) die Form der Schächte (51). Danach ergibt sich durch die Verschleißriegel (54) zunächst eine schwache und dann durch die keilförmigen Erweiterungen (58) eine stärkere keilförmige Verjüngung der Schächte (51). Auch die Bereiche (60) konstanter Dicke oder leicht keilförmige Erweiterung der Stege (39) führen zufolge der radialen Anordnung der Stege (39) zu einer schwächer werdenden, keilförmigen Verjüngung der Schächte (51) in radialer Richtung.

Es hat sich auch als vorteilhaft erwiesen, im Bereich des Übergangs zwischen einer keilförmigen Verdickung (60) und einer keilförmigen Verjüngung (62) des Steges (39) eine Zone konstanter Dicke vorzusehen, um den Verschleiß der Stegwände an den Kanten dieser Übergänge zu reduzieren. Diese Zonen konstanter Dicke besitzen zweckmäßigerweise eine geringe Höhe von einigen Millimetern, in radialer Richtung gesehen.

Man hat es in der Hand, durch das Ausmaß der keilförmigen Verjüngungen (62) der Stege (39) zu bestimmen, ob die Schächte (51) im mittleren und radial inneren Bereich eine konstante Breite oder eine Verjüngung besitzen. In der Praxis hat sich als vorteilhaft erwiesen, wenn die Schächte (51) sich radial nach innen wieder keilförmig erweitern, wobei die Länge des Bereiches (62) des Steges (39) größer als die halbe radiale Länge des Steges (39) sein soll. Die dadurch bedingte keilförmig nach innen sich öffnende Erweiterung des Preßkanals (51) führt dazu, daß der im Preßkanal (51) langsam nach innen vorrückende, verdichtete Strang trotz Quellbestrebung und Entgasungsdruck keiner sich verstärkenden, sondern eher entlastenden Reibung ausgesetzt wird.

In Fig. 7 ist schließlich gezeigt, daß es sich empfiehlt, in den Außenwandflächen der Stege (39) radial nach innen sich erstreckende Längsrinnen (66) anzuordnen.

Diese Längsrinnen (66) haben den Sinn, den beim Verdichten des Halmgutes sich stark erhöhenden Gasdruck entweichen zu lassen. Deshalb sind auch an der inneren Stirnseite die Längsrinnen (66) offen.

Durch die vorstehend erwähnte Hinterschneidung (64) zwischen der keilförmigen Erweiterung (58) und dem Verschleißriegel (54) wird eine Art Widerhakenwirkung erzeugt, welche das eingepreßte Material daran hindert, einen erheblichen radialen Druck nach außen im Sinne der Druckentspannung auszuüben. Andererseits wird das in den Preßkanal (51) eingedrückte Material durch die Abschrägungen (58) in eine von der radialen Richtung abweichende Richtung abgelenkt, was zu einer pfeilartigen Schichtenbildung im Strang führt. Diese hat, wenn das gepreßte Material als Heizmittel verwendet werden soll, den Vorteil, daß der einzelne Preßkörper unter Hitzeeinwirkung leichter aufgeht, eine größere Oberfläche für den Zugang von Sauerstoff entwickelt und damit einen größeren Heizwirkungsgrad bewirkt.

Sämtliche geschilderten Maßnahmen führen letztlich dazu, daß die Reibung des durch die Schächte (51) in gepreßter Form geführten Materials an den Außenwänden der Stege (39) so gering wie möglich gehalten wird, was dazu beizutragen hilft, ein Maximum an Materialdurchsatz bei einem Minimum an Energieaufwand zu erhalten. Es empfiehlt sich daher auch, die Außenflächen der Stege (39) möglichst reibungsarm auszubilden.

Die in den Stegen (39) in parallel zur Rotationsachse der Hohlkörper (33) sich erstreckenden Bohrungen (72) sind, wie schon zu Fig. 2 und 3 ausgeführt, dazu bestimmt, ein Wärmemittel bis unmittelbar an die Preßorgane heranzuführen. Der Wirkungsgrad ist optimal, wenn die Erwärmung der Stege auf über 150°C, insbesondere im Bereich von 165°C, erfolgt.

In der Praxis hat sich gezeigt, daß die beste Preßwirkung erzielt werden kann, wenn die Auspuffgase der Brennkraftmaschine (5) durch die Bohrungen (72) geleitet werden. Dann ist eine Erwärmung der Stege (39) auf ungefähr 165°C ohne Einsatz einer besonderen Wärmequelle erreichbar.

Ausgehend von einer Ausbildung der Stege (39) entsprechend Fig. 7 und 8 ist die Verdichtung des Halmgutes beendet, sobald das in den Schächten (51) befindliche Material das innere Ende des Bereiches (60) konstanter Stegdicke erreicht hat. Dessen ungeachtet erstrecken sich die Stege (39) in radialer Richtung noch wesentlich länger, obwohl zufolge der keilförmigen Verjüngung (62) der Stege (39) keine zusätzliche Verdichtung mehr gewollt ist.

Der Sinn dieser Maßnahme liegt darin, dem verpreßten Halmgut im Schacht (51) eine längere Verweilzeit zu verschaffen und damit eine Aushärtung des Materials in die Wege zu leiten. Diese längere Verweilzeit darf sich aber nicht widerstandserhöhend auswirken, weshalb die keilförmige Verjüngung (62) und die Oberflächenglättung der Stege (39) bevorzugt wird. Auch die Längsrinnen (66) tragen zur Entgasung und damit zur Reibungsminderung wesentlich bei.

Ausgehend von diesen Betrachtungen ist das Verhältnis der Eindringtiefe (52) der Stege (39) bzw. Verschleißriegel (54) zur radialen Länge der Stege (39) extrem unterschiedlich zum Stand der Technik. Die Erfindung schlägt vor, dieses Verhältnis in der Größenordnung von mehr als 1:8, vornehmlich 1:10 bis 1:25 zu bemessen.

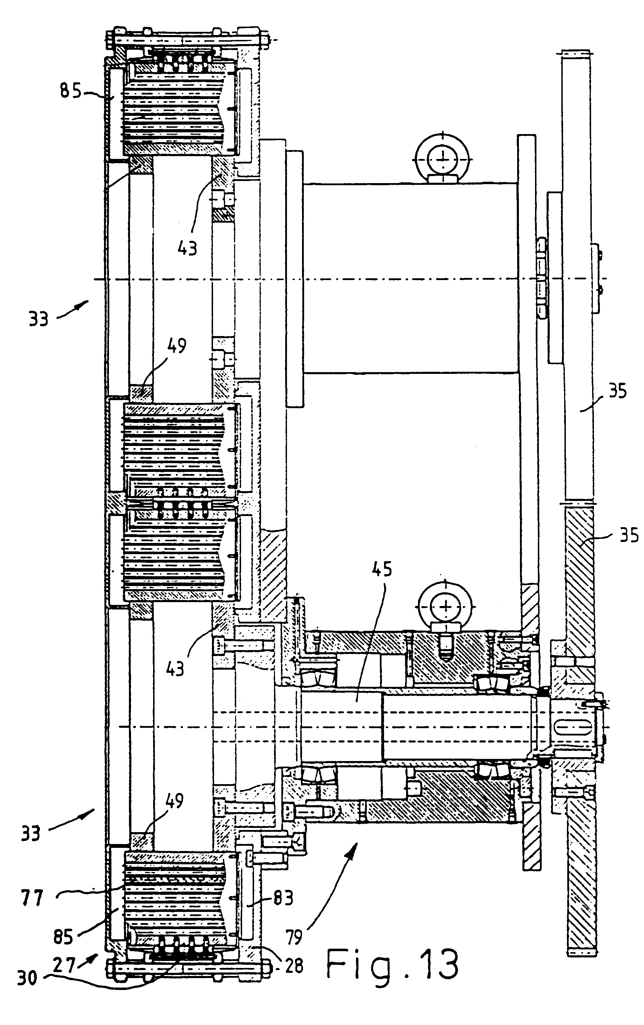

Die Erfindung zeigt obendrein, daß man die Verweilzeit der Preßmasse im Schacht auch noch dadurch optimieren kann, daß man die Strömungsgeschwindigkeit des Heizmediums in den Bohrungen (72) der Stege (39) reduziert. Dies kann man beispielsweise durch Einsatz von Wendeln (77) oder dergleichen Strömungshindernissen in die Bohrungen (72) erreichen, wie dies am Beispiel der Fig. 7 und 13 gezeigt ist.

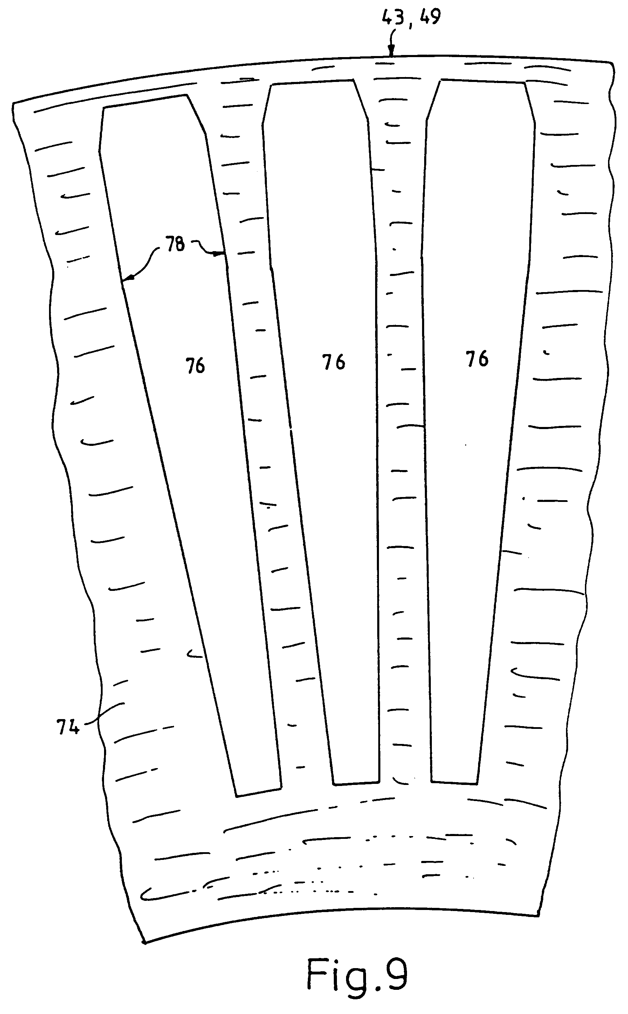

In den Fig. 9 bis 11 ist nun im Detail gezeigt, wie die Stege (39) gemäß Fig. 7 mit den Flanschkörpern (43) der Hohlwalzen (33) verbunden werden können, so daß einerseits eine Austauschbarkeit der Stege gegeben ist und andererseits die beim Pressen entstehenden besonders hohen Kräfte aufgefangen werden können, ohne daß Bruchgefahr besteht.

Fig. 9 zeigt in diesem Zusammenhang den Teilbereich einer Wange (74) des einzelnen Flanschkörpers (43) in einer stirnansicht. Diese Wange (74) weist regelmäßig verteilte Aussparungen bzw. Durchbrüche (76) auf, die dazu bestimmt sind, jeweils einen Steg (39), gegebenenfalls auch ein Paar benachbarter Stege (39) aufzunehmen, wie dies in Fig. 10 dargestellt ist. Demgemäß bestimmen die Ränder (78) der Aussparungen (76) die radiale Lage des einzelnen Steges (39), die in dieser Lage durch jeweils eine Leiste (80) gegen die Ränder (78) verkeilt sind. Diese Leiste (80) braucht mit nur einer Schraube (82) an der Wange befestigt zu werden, wie dies in Fig. 10 gezeigt ist.

An ihren Seitenwandflächen weisen die Stege (39) in radialer Richtung sich erstreckende nutenartige Einfräsungen (92) auf, die im Montagezustand den Leisten (80) direkt gegenüberliegen. Wegen der Profilierung der Seitenwandflächen der Stege (39) sind die Einfräsungen (92) nur stellenweise vorhanden. Die Leisten (80) greifen in die Einfräsungen (92) ein und bilden somit beidseits der Wangen (74) achsparallele Anschläge und verhindern damit eine axiale Beweglichkeit der Stege (39) in den Wangen (74).

Aus Fig. 10 sieht man weiterhin, daß die Verschleißriegel (54) sich radial über den Außenumfang der Wange (74) hinaus erstrecken.

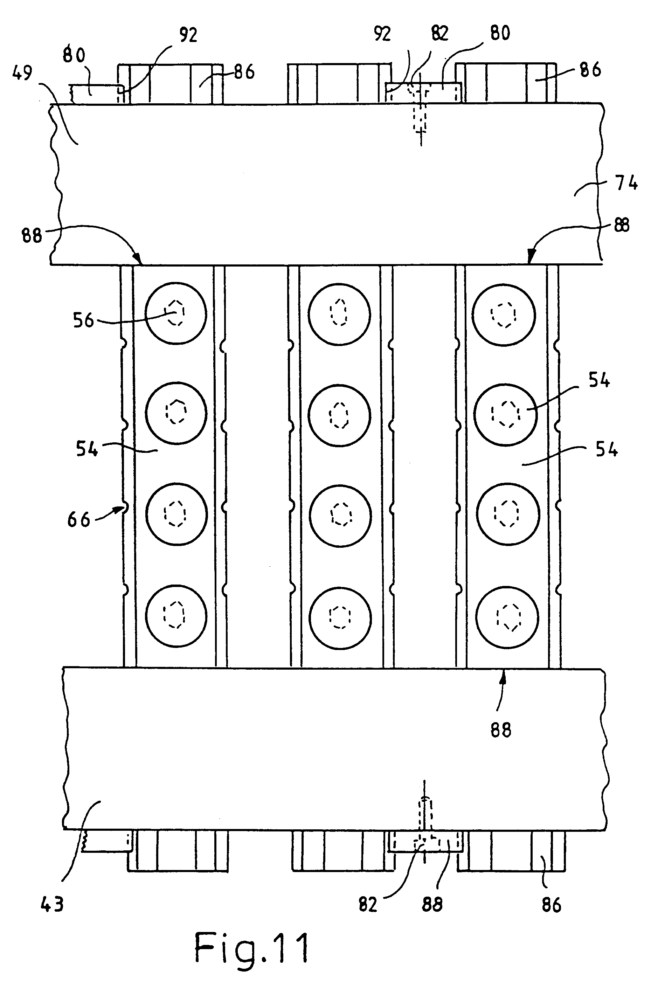

Aus der Draufsicht der Fig. 11 ist ersichtlich, daß die Verschleißriegel (54) nur eine dem Abstand der Wangen (74) entsprechende Länge besitzen. Dadurch ergeben sich Anschläge (88), die zufolge der Verschraubung (56) der Verschleißriegel (54) mit den Stegen (39) ebenfalls eine Fixierung der Stege längs der Achse der Hohlkörper (33) gegenüber den Wangen (74) der Flanschkörper (43,49) ergeben.

Schließlich ragen die Stege (39) mit den überstehenden Bereichen (86) über die Außenflächen der Wangen (74) hinaus, was den Sinn hat, daß die Leisten (80) an der Außenseite der Wangen (74) zum Verkeilen der Stege (39) angeordnet und gegenüber den überstehenden Bereichen (86) zur Einwirkung gebracht werden können.

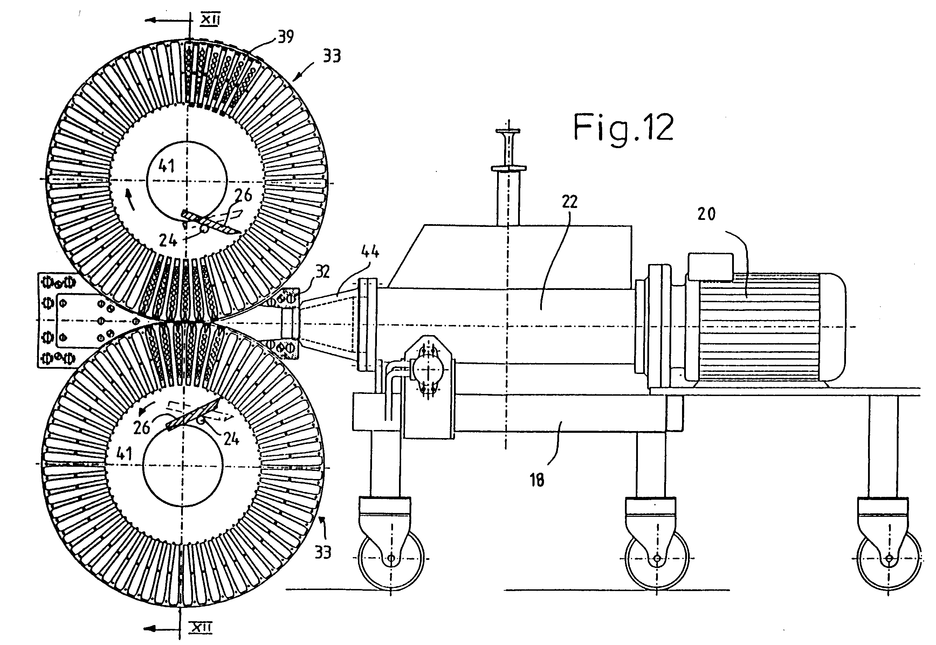

Die erfindungsgemäße Pelletiereinrichtung kann, wie dies Fig. 12 zeigt, anstelle auf einem Erntefahrzeug auch stationär angeordnet werden. Die Hohlwalzen (33) entsprechen in ihrem Aufbau dem Ausführungsbeispiel der Fig. 5. Das nicht dargestellte Gehäuse (27) kann ortsfest angeordnet sein.

Auf einem fahrbaren Gestell (18) ist ein Elektromotor (20) angeordnet, der eine im Gehäuse (22) befindliche Förderschnecke analog (15) in Fig. 1 antreibt. Das vom Feld herantransportierte und gegebenenfalls zerkleinerte Halmgut wird dem konischen Schneckengehäuse (44) (siehe auch Fig. 6) zugeführt, in der eine Kegelschnecke (48) zum zwangsweisen Übergeben des Halmgutes an die Hohlwalzen (33) sich befindet.

In den Hohlräumen (41) der Hohlwalzen (33) befinden sich Abstreifer (26), die nach Rakelart gegen die inneren Ränder der Stege (39) wirken und die dort austretenden verdichteten Stränge des Halmgutes abbrechen.

Wenn man größere Längen der abgebrochenen Preßkörper erzielen will, muß man den Abstreifer (26) eine wählbare Zeit aus der Rakelstellung bringen. Dies kann man beispielsweise mit einer Verstellachse (24) durchführen, an welcher der Abstreifer (26) befestigt ist. Durch Verdrehen dieser Achse läßt sich der Abstand des Abstreifers (26) vom inneren Rand der Stege (39) verändern.

Das Ausführungsbeispiel der Fig. 13 zeigt im Gegensatz zu Fig. 3 eine fliegende Lagerung (79) der Hohlkörper (33). Der lagerseitige Flanschkörper (43) ist mit der Antriebswelle (45) fest verbunden. Der auslaufseitige Flanschkörper (49) wird über die Vielzahl der Stege (39) vom Flanschkörper (43) mitgetragen.
Das Gehäuse (27) besteht aus dem Gehäuserahmen (28) und der Gehäuseschale (30), die über Bolzen (81) miteinander verbunden sind und die Stege (39) umgreifen. An beiden Stirnseiten der Stege (39) schließen sich Kammern (83) und (85) an, die zur Zufuhr und Abfuhr von Wärmemitteln bestimmt sind. Auf diese einfache Weise lassen sich z.B. Abgase einer Brennkraftmaschine durch die Bohrungen (72) der Stege (39) führen.

Um die Wärme des Wärmemittels möglichst vollständig auszunutzen, empfiehlt es sich, in den Bohrungen (72) der Stege (39) Elemente, z.B. Wendel (77), anzuordnen, welche die Störmungsgeschwindigkeit des Wärmemittels reduzieren soll. Solche Wendel (77) sind in jeweils einer Bohrung (72) in Fig. 7 und 13 symbolisch dargestellt.

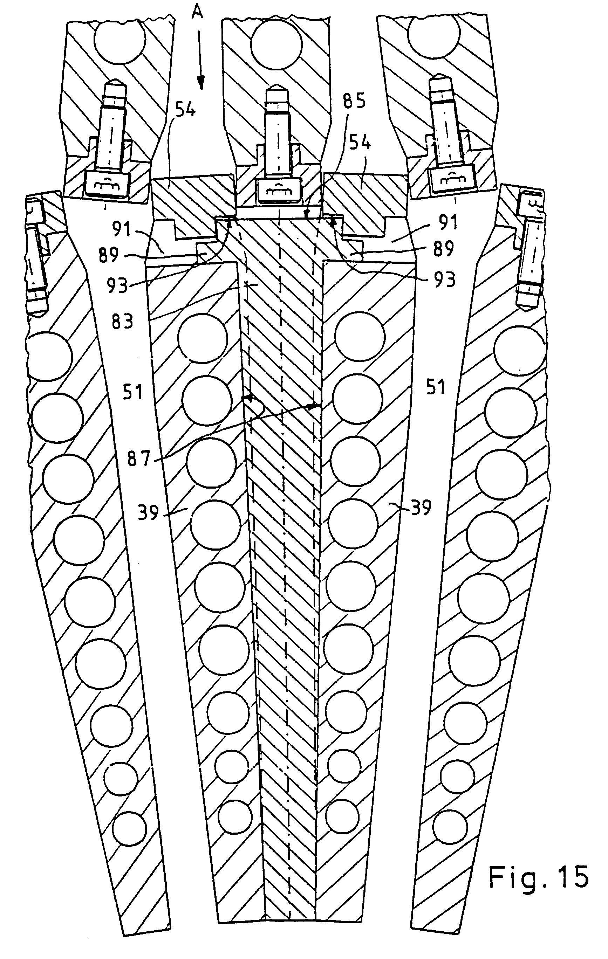

Die Fig. 15 bis 17 knüpfen an das Ausführungsbeispiel der Fig. 8 und zeigen eine vorteilhafte Weitergestaltung, die allerdings nicht abhängig von der Querschnittsform der Stege (3) ist.

Im Sinne einer möglichst großen Durchsatzmenge und demgemäß hohem Wirkungsgrad wird angestrebt, die Länge der Stege (39) und demgemäß der Preßkanäle (51), in axialer Richtung der Hohlwalzen (33) gesehen, möglichst groß zu halten. In diesem Falle treten dann aus den Preßkanälen (51) verhältnismäßig breite Stränge aus, bei deren Abbrechen nicht ohne weiteres gesichert ist, eine für die weitere Verarbeitung der Granulate vorteilhafte Größe zu erhalten.

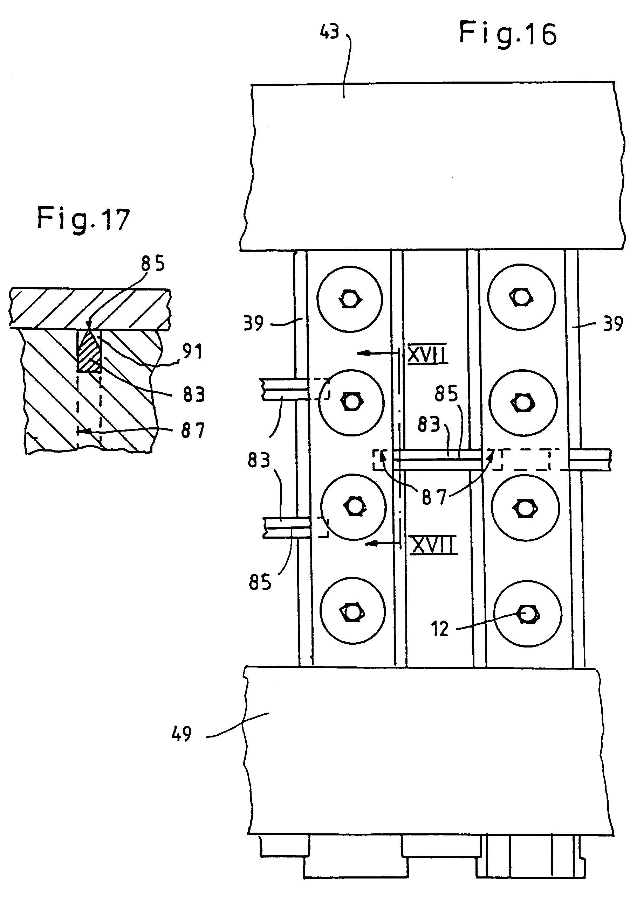

Aus diesem Grunde ist in dem Beispiel der Fig. 16 bis 18 gezeigt, daß die Preßkanäle (51) durch Trennwände (83) unterteilt sind, welche sich in radialen Ebenen, bezogen auf die Achse der Hohlwalzen (33), erstrecken und die Preßkanäle (51) quer durchsetzen.

Aus Fig. 15 ist erkennbar, daß die einzelne Trennwand (83) in der axialen Ansicht eine sich von außen nach innen verjüngende Keilform aufweist. Aus den Darstellungen der Fig. 16 und 17 ist erkennbar, daß der Querschnitt der Trennwand (83) prismatisch, insbesondere rechteckig ist. Auf diese Weise wird ermöglicht, die Trennwand (83) in Nuten (87) der Stege (39), die einander gegenüberliegen, zu führen.

Im Beispiel der Fig. 16 ist gezeigt, daß der einzelne Preßkanal (51) entweder durch eine einzige Trennwand (83) oder durch zwei oder mehrere Trennwände (83) unterteilt werden kann. Diese Fig. 16 zeigt weiterhin symbolisch, daß die Stege (39) in Flanschkörpern (43,49) geführt sind, welche zusammen mit den Stegen (39) die Hohlwalzen (33) bilden.

Im äußeren Stirnbereich weist die einzelne Trennwand (83) eine bevorzugt firstartige Schneidkante (85) auf, welche durch Abschrägung der Trennwand (83) entsprechend dem Ausführungsbeispiel der Fig. 17 gebildet werden kann. Diese Schneidkante (85) hat zur Aufgabe, den Widerstand der Trennwand (83) gegenüber dem Preßdruck, den die einzelnen Stege (39) gegenüber dem Preßdruck, den die einzelnen Stege (39) beim Einstopfen des pflanzlichen Gutes in die Preßkanäle (51) erzeugen, zu verringern. Auf diese Weise wird eine Aufteilung der Preßkanäle (51) und damit der in diese Preßkanäle (51) hineinverdichteten Stränge erreicht, was zu einer Verringerung der Breite der zu bildenden Granulate führt.

Die einzelne Trennwand (83) muß in ihrer Lage gesichert sein, um unter dem Einfluß des Preßdruckes nicht beweglich zu werden. Zu diesem Zweck weist die einzelne Trennwand hammerkopfartige Ansätze (89) auf, welche in Nuten (91) der Stege (39) eingreifen (vergleiche Fig. 15). Diese Nuten erstrecken sich in Umfangsrichtung, bezogen auf die Bewegung der Stege (39). Die einzelne Trennwand (83) stützt sich unter dem Einfluß des Preßdruckes folglich am Grund der Nut (91) ab. In anderer Richtung wird die Trennwand (83) beziehungsweise der einzelne hammerkopfartige Ansatz (89) durch eine Anschlagfläche (93) eines Verschleißriegels (54) gebremst, welcher die eigentlichen Schneidkanten des Steges (39) bildet. Diese Verschleißriegel (54) sind, wie Fig. 17 zeigt, über Schrauben (94) an den Stirnflächen der Stege (39) festgelegt.

Auf diese Weise wird das Einsetzen und Entnehmen der einzelnen Trennwände (83) erleichtert, weil lediglich die Verschleißriegel (54) zu schrauben sind.

Die Schneidkante (85) erstreckt sich, wie Fig. 16 zeigt, lediglich zwischen den einander zugekehrten Seitenflächen der Verschleißriegel (54). Auf diese Weise wird verhindert, daß sich seitliche Kanäle durch die Abschrägung längs der Anschlagfläche bilden. Die Schneidkante (85) fluchtet mit den seitlichen angrenzenden Stirnflächen der Trennwand (83).

Fig. 18 stellt symbolisch eine Schleifeinrichtung (96) dar, die parallel zur Achse der einzelnen Hohlwalze (33) und demgemäß längs der Schneidkante (70) des einzelnen Steges (39) beziehungweise dessen Verschleißriegel (54) hin- und herbeweglich ist. Hierzu wird eine rotierend angetriebene Schleifwalze (98) auf einer achsparallelen Achse (97) gelegentlich längs des Pfeiles (99) hin- und herbewegt. Diese schleifwalze glättet die Umfangsfläche des Verschleißriegels (54) und schärft somit die Schneidbeziehungsweise Stegkante (70).

### STÜCKLISTE

- 1: Fahrerkabine
- 2: Erntemaschine
- 3: Rad
- 4: Pick-up-Aufnahmevorrichtung
- 5: Brennkraftmaschine
- 6: Seitenförderschnecke
- 7: Mähwerkzeug
- 8: Förderzinken
- 9: Schrägförderer
- 10: Einlaufbereich
- 11: Vertikalförderer
- 12: Preßvorrichtung
- 13: Nachzerkleinerungswerk (Umlenkwalze)
- 14: Schneidmesser
- 15: Trogschnecke
- 16: Elevator
- 17: Preßschnecke
- 18: Gestell
- 19: Pelletiervorrichtung
- 20: Elektromotor
- 21: Bunker
- 23: Wärmetauscher
- 24: Verstellachse
- 25: Verbindungsleitung
- 26: Abstreifer
- 27: Gehäuse
- 28: Gehäuserahmen
- 29: Lager
- 30: Gehäuseschale
- 31: Lager
- 32: Gehäuseanschluß
- 33: Hohlwalze (Hohlrad)
- 34: keilförmig sich erweiternder Hohlraum
- 35: Zahnradgetriebe
- 36: keilförmiges Bauteil
- 37: Antriebswelle
- 38: Außenfläche
- 39: Steg
- 40: minimales Spiel
- 41: Hohlraum
- 42: maximales Spiel
- 43: Flanschkörper
- 44: Schneckengehäuse
- 45: Achszapfen
- 46: keilförmig sich verjüngender Hohlraum
- 47: Auslaßöffnung
- 48: keilförmige Preßschnecke
- 49: Flanschkörper
- 50: radiale Länge
- 51: Preßkanal (Schacht)
- 52: Eindringtiefe
- 53: Brechkegel
- 54: Verschleißriegel
- 55: radiales Leitblech
- 56: Schraube
- 57: Wärmemittelkanal
- 58: keilförmige Erweiterung
- 59: Flüssigkeits-Drehkupplung
- 60: Bereich konstanter Dicke
- 61: Gehäuse
- 62: keilförmige Verjüngung
- 63: Gehäusebereich
- 64: Hinterschneidung
- 65: Wärmemittelkanal
- 66: Längsrinne
- 67: Nachpreßwalze
- 68: offener Auslauf
- 69: Nachpreßwalze
- 70: Stegkante
- 71: Stempel
- 72: Wärmemittel-Bohrung
- 73: Drehrichtung
- 74: Wange des Flanschkörpers
- 75: Gehäusehälften
- 76: Aussparung
- 77: Wendel
- 78: Rand
- 79: fliegende Lagerung
- 80: Leiste
- 81: Bolzen
- 82: Schraube
- 83: Trennwand
- 84: Nut
- 85: Schneidkante
- 86: überstehender Bereich
- 87: Nut
- 88: Anschlag
- 89: hammerkopfartiger Ansatz
- 90: Stegansatz
- 91: Nut
- 92: Einfräsung
- 93: Anschlagfläche
- 94: Schraube
- 95: Pfeil
- 96: Schleifeinrichtung
- 97: Achse
- 98: Schleifwalze
- 99: Pfeil
- 131: Gehäuse
- 133: konusförmiger Preßraum
- 135: Kegelschnecke
- 137: Schneckenauslaß
- 139: Matrizenrohr
- 143: Heizmittelkanal

## Patentansprüche

1. Vorrichtung zum Pelletieren von pflanzlichem Gut, insbesondere Halmgut, zu schüttfähigen Preßlingen, mit zwei parallel zueinander gelagerten, zwangsweise und gegenläufig zueinander angetriebenen und zahnradartig mit leistenartig ausgebildeten Zähnen (39) ineinandergreifenden Hohlwalzen (33), zwischen deren Zähnen (39) radial zum Innenraum der Hohlwalzen (33) führende und sich mindestens stellenweise radial nach innen verengende Preßkanäle (51) vorgesehen sind, wobei das zu verpressende Gut mittels Förderschnecke (17) oder dergleichen in den einlaufseitigen Umfangszwickel der Hohlwalzen (33) herangeführt, durch die radialen Preßkanäle (51) verdichtet und im Innenraum (41) der Hohlwalzen (33) abgebrochen sowie in axialer Richtung aus dem Innenraum (41) abgeführt wird, dadurch **gekennzeichnet**, daß die Zähne (39) aus in radialer und axialer Richtung langgestreckten, beheizbaren Stegen (39) bestehen, welche mit zwei koaxial und im Abstand zueinander angeordneten Flanschkörpern (43,49) verbunden sind und zwischen sich radial durchgehende Schächte (51) als Preßkanäle bilden, wobei die Hohlwalzen (33) von einem Gehäuse (27) umgriffen sind.

2. Vorrichtung nach Anspruch 1, dadurch **gekennzeichnet**, daß die Stege (39) lösbar mit den Flanschkörpern (43,49) verbunden sind.

3. Vorrichtung nach Anspruch 1 oder 2, dadurch **gekennzeichnet**, daß die Stege (39) achsparallele Bohrungen (57,72) zum Anschluß an Heizmittel-Leitungen aufweisen.

4. Vorrichtung nach Anspruch 1 oder einem der folgenden, dadurch **gekennzeichnet**, daß das die Hohlwalzen (33) umgreifende Gehäuse (27) beheizbar ausgebildet, insbesondere mit Bohrungen (65) zum Anschluß an Heizmittel-Leitungen versehen ist.

5. Vorrichtung nach Anspruch 1 oder einem der folgenden, dadurch **gekennzeichnet**, daß die Pelletiervorrichtung Bestandteil eines Fahrzeuges, insbesondere selbstfahrenden Erntefahrzeuges ist, mit dessen Hilfe das pflanzliche Gut gemäht, aufgenommen, zerkleinert, gefördert, gepreßt und gebunkert werden kann.

6. Vorrichtung nach Anspruch 1 oder folgenden, dadurch **gekennzeichnet**, daß die Stege (39) oder/und das Gehäuse (27) aus der Abwärme einer Brennkraftmaschine (5) des Erntefahrzeuges beheizbar, beispielsweise an deren Kühlkreislauf angeschlossen sind.

7. Vorrichtung nach Anspruch 1 oder folgenden, dadurch **gekennzeichnet**, daß die Stege (39) oder/und das Gehäuse (27) auf wenigstens 100°C, vorzugsweise auf mehr als 150C°, erwärmt sind.

8. Vorrichtung nach Anspruch 1 oder folgenden, dadurch **gekennzeichnet**, daß die Stege (39) oder/und das Gehäuse (27) aus den Auspuffgasen einer Brennkraftmaschine (5) beheizbar sind.

9. Vorrichtung nach Anspruch 1 oder einem der folgenden, dadurch **gekennzeichnet**, daß die radiale Länge (50) der Stege (39) wesentlich größer als die Eindringtiefe (52) der Stege (39) in die zugeordneten Schächte (51) ist.

10. Vorrichtung insbesondere nach Anspruch 1 oder einem der folgenden, dadurch **gekennzeichnet**, daß zwischen der Innenfläche des Gehäuses (27,30) und der äußersten Rotationsbahn der Stege (39) ein sich in Bewegungsrichtung der Stege erweiterndes Spiel (40,42) vorgesehen ist.

11. Vorrichtung, insbesondere nach Anspruch 1 oder einem der folgenden, dadurch **gekennzeichnet**, daß die äußeren Stirnbereiche der Stege (39) als Verschleißriegel (54) ausgebildet und mit den Stegen (39) lösbar verbunden, insbesondere verschraubt (56) sind.

12. Vorrichtung insbesondere nach Anspruch 1 oder einem der folgenden, dadurch **gekennzeichnet**, daß der einzelne Steg (39) über seine radiale Länge (50) unterschiedliche Dicken besitzt, dergestalt, daß der Steg sich (39) von außen radial nach innen zunächst stärker und dann schwächer keilförmig erweitert (58,60), um sich daraufhin keilförmig zu verjüngen (62).

13. Vorrichtung insbesondere nach Anspruch 1 oder einem der folgenden, dadurch **gekennzeichnet**, daß in den Stegaußenflächen radial sich erstreckende Längsrinnen (66) vorgesehen sind.

14. Vorrichtung nach Anspruch 1 oder einem der folgenden, dadurch **gekennzeichnet**, daß in den ablaufseitigen Zwickel der Hohlwalzen (33) ein keilförmiges Bauteil (36) des Gehäuses (27,28,30) hineinragt, dessen Außenfläche (38) in Gleitreibung zu den Außenflächen (70) der Stege (39) steht.

15. Vorrichtung, insbesondere nach Anspruch 1 oder einem der folgenden, dadurch **gekennzeichnet**, daß der einzelne Preßkanal (51) von mindestens einer quer zur Rotationsachse angeordneten Trennwand (83) durchsetzt ist, die an den einander zugekehrten Außenseiten benachbarter Stege (39) geführt ist und deren außenliegende Stirnseite eine Schneidkante (85) besitzt.

16. Vorrichtung nach Anspruch 15, dadurch **gekennzeichnet**, daß die Trennwand (83) einen rechteckigen Querschnitt aufweist und in radial sich erstreckenden, einander gegenüberliegenden Nuten (87) der Stege (39) geführt ist.

17. Vorrichtung nach Anspruch 15 oder 16, dadurch **gekennzeichnet**, daß die Trennwand (83) durch Anschläge (89) in radialer Richtung an den Stegen (39) abgestützt ist.

## Claims

1. Device for pelletising vegetable material, especially grass and straw material, to form discrete pressed shapes, with two hollow rollers (33) which are mounted parallel to one another, are driven forcibly and in opposite directions to one another and interengage like toothed wheels with teeth (39) constructed in strip form, pressing channels (51) which lead radially to the interior of the hollow rollers (33) and narrow radially inwards, at least in places, being provided between the teeth (39) of the said hollow rollers, wherein the material to be compressed is delivered by means of a screw conveyor (17) or the like into the circumferential nip of the hollow rollers (33) on the inlet side, is compacted by the radial pressing channels (51) and in the interior (41) of the hollow rollers (33) is broken off and discharged in the axial direction from the interior (41), characterised in that the teeth (39) consist of lands (39) which are elongated in the radial and axial directions and can be heated and which are also connected to two flange bodies (43, 49) disposed coaxially and spaced from one another, the said lands forming between them radially extending shafts (51) as pressing channels, and the hollow rollers (33) are surrounded by a housing (27).

2. Device according to Claim 1, characterised in that the lands (39) are releasably connected to the flange bodies (43, 49).

3. Device according to Claim 1 or 2, characterised in that the lands (39) have bores (57, 72) with parallel axes for connection to pipes for the heating medium.

4. Device according to Claim 1 or one of the following claims, characterised in that the housing (27) surrounding the hollow rollers (33) is constructed so that it can be heated, and in particular is provided with bores (65) for connection to pipes for the heating medium.

5. Device according to Claim 1 or one of the following claims, characterised in that the pelletising device is a component part of a vehicle, particularly a self-driving harvester, with the aid of which the vegetable material can be mown, picked up, comminuted, conveyed, pressed and binned.

6. Device according to Claim 1 or the following claims, characterised in that the lands (39) and/or the housing (27) can be heated by the waste heat from an internal combustion engine (5) of the harvester, and are for example connected to the cooling circuit thereof.

7. Device according to Claim 1 or the following claims, characterised in that the bars (39) and/or the housing (27) are heated to at least 100°C, preferably to more than 150°C.

8. Device according to Claim 1 or the following claims, characterised in that the lands (39) and/or the housing (27) can be heated by the exhaust gases from an internal combustion engine (5).

9. Device according to Claim 1 of one of the following claims, characterised in that the radial length (50) of the lands (39) is substantially greater than the depth of penetration (52) of the lands (39) into the associated shafts (51).

10. Device, particularly according to Claim 1 or one of the following claims, characterised in that a clearance (40, 42) which widens in the direction of movement of the lands is provided between the inner surface of the housing (27, 30) and the outermost rotational path of the lands (39).

11. Device, particularly according to Claim 1 or one of the following claims, characterised in that the outer end regions of the lands (39) are constructed as wear bars (54) and are releasably connected, especially screwed (56), to the lands (39).

12. Device, particularly according to Claim 1 or one of the following claims, characterised in that the individual land (39) has different thicknesses over its radial length (50) in such a way that the land (39) widens (58, 60) radially from the outside inwards first of all more sharply and then less markedly in a wedge shape, whereupon it tapers (62) in a wedge shape.

13. Device, particularly according to Claim 1 or one of the following claims, characterised in that radially extending longitudinal grooves (66) are provided in the outer surfaces of the lands.

14. Device according to Claim 1 or one of the following claims, characterised in that a wedge-shaped component (36) of the housing (27, 28, 30) projects into the nip of the hollow rollers (33) on the outlet side, the outer surface (38) of the said component being in sliding frictional contact with the outer surfaces (70) of the lands (39).

15. Device, particularly according to Claim 1 or one of the following claims, characterised in that the individual pressing channel (51) has passing through it at least one partition (83) which is disposed transversely with respect to the axis of rotation and is guided on the outer surfaces which face one another of adjacent bars (39), the external end face of the said partition having a cutting edge (85).

16. Device according to Claim 15, characterised in that the partition (83) has a rectangular cross-section and is guided in radially extending grooves (87) which lie opposite one another in the lands (39).

17. Device according to Claim 15 or 16, characterised in that the partition (83) is supported in the radial direction on the lands (39) by stops (89).

## Revendications

1. Dispositif de bouletage de matières végétales notamment de paille, en comprimés pouvant être mis en tas, Comportant deux cylindres (33) creux parallèles, entraînés positivement et en sens inverse et engrenant l'un dans l'autre à la manière de roues dentées par des dents (39) en forme de règlette, dents (39) entre lesquelles sont prévus des canaux (51) de compression menant radialement à l'intérieur des cylindres (33) creux et se rétrécissant radialement vers l'intérieur au moins par endroit, la matière à comprimer étant amenée au moyen de vis (17) convoyeuses ou analogues à l'entrée périphérique cunéiforme des cylindres (33) creux, étant densifiée dans les canaux (51) radiaux de compression et rompue à l'intérieur (41) des cylindres (33) creux ainsi qu'évacuée de l'intérieur (41) en direction axiale, caractérisé en ce que les dents (39) sont constituées de règlettes (39) s'étendant en longueur en direction radiale et axiale, pouvant être chauffées, qui sont reliées à deux flasques (43, 45) coaxiaux et à distance l'un de l'autre et qui forment entre elles des puits (51) continus radialement servant de canaux de compression, les cylindres (33) creux étant enveloppés d'une enveloppe (27).

2. Dispositif suivant la revendication 1, caractérisé en ce que les réglettes (39) sont reliées de manière amovible aux flasques (43, 49).

3. Dispositif suivant la revendication 1 ou 2, caractérisé en ce que les réglettes (39) comportent des trous (57, 72) parallèles à l'axe de raccordement à des conduits de fluide de chauffage.

4. Dispositif suivant la revendication 1 ou l'une des suivantes, caractérisé en ce que l'enveloppe (27) enveloppant les cylindres (33) creux est constituée de manière à pouvoir être chauffée en étant munie notamment de trous (65) de raccordement à des conduits de fluide de chauffage.

5. Dispositif suivant la revendication 1 ou l'une des suivantes, caractérisé en ce que le dispositif de bouletage fait partie d'un véhicule notamment d'un véhicule de récolte automobile à l'aide duquel la matière végétale peut être fauchée, prise, fragmentée, transportée, comprimée et mise en silo.

6. Dispositif suivant la revendication 1 ou l'une des suivantes, caractérisé en ce que les réglettes (39) et/ou l'enveloppe (27) peuvent être chauffées par la chaleur perdue d'un moteur (5) à combustion interne du véhicule de récolte en étant, par exemple, raccordées à son circuit de refroidissement.

7. Dispositif suivant la revendication 1 ou l'une des suivantes, caractérisé en ce que les réglettes (39) et/ou l'enveloppe (27) peuvent être portées à au moins 100°C, de préférence à plus de 150°C.

8. Dispositif suivant la revendication 1 ou l'une des suivantes, caractérisé en ce que les réglettes (39) et/ou l'enveloppe (27) peuvent être chauffées par les gaz d'échappement d'un moteur (5) à combustion interne.

9. Dispositif suivant la revendication 1 ou l'une des suivantes, caractérisé en ce que la longueur (50) radiale des réglettes (39) est sensiblement plus grande que la profondeur (52) de pénétration des réglettes (39) dans les puits (51) associés.

10. Dispositif notamment suivant la revendication 1 ou l'une des suivantes, caractérisé en ce qu'entre la face intérieure de l'enveloppe (27, 30) et la voie de rotation la plus extérieure des réglettes (39), il est prévu un jeu (40, 42) s'élargissant dans la direction de déplacement des réglettes.

11. Dispositif notamment suivant la revendication 1 ou l'une des suivantes, caractérisé en ce que les parties frontales extérieures des réglettes (39) sont constituées sous la forme de pièces d'usure (54) et sont reliées aux réglettes (39) de manière amovible, notamment y sont vissées (56).

12. Dispositif notamment suivant la revendication 1 ou l'une des suivantes, caractérisé en ce que chaque réglette (39) a sur sa longueur (50) radiale des épaisseurs différentes, de sorte que la réglette (39) s'élargie de l'extérieur radialement vers l'intérieur d'abord beaucoup puis moins d'une manière cunéiforme pour se rétrécir (62) ensuite d'une manière cunéiforme.

13. Dispositif suivant la revendication 1 ou l'une des suivantes, caractérisé en ce qu'il est prévu dans les faces extérieures des réglettes, des rainures (66) longitudinales s'étendant radialement.

14. Dispositif suivant la revendication 1 ou l'une des suivantes, caractérisé en ce que dans la sortie cunéiforme des cylindres (33) creux pénètre un élément (36) cunéiforme de l'enveloppe (27, 28, 30) dont la surface (38) extérieure frotte en glissant sur les surfaces (70) extérieures des réglettes (39).

15. Dispositif notamment suivant la revendication 1 ou l'une des suivantes, caractérisé en ce que chaque canal (51) de compression est traversé par au moins une cloison (83) transversale à l'axe de rotation, guidée sur les faces extérieures tournées l'une vers l'autre de réglettes (39) voisines et dont la face frontale extérieure possède une arête (85) de coupe.

16. Dispositif suivant la revendication 15, caractérisé en ce que la cloison (83) a une section transversale rectangulaire et est guidée dans des gorges (87) des réglettes (39), gorges qui sont opposées l'une à l'autre et qui s'étendent radialement.

17. Dispositif suivant la revendication 15 ou 16, caractérisé en ce que la cloison (83) s'appuie par des butées (89) en direction radiale sur les réglettes (39).
